# EUROPEAN PATENT SPECIFICATION

(11) **EP 2 733 322 B1**
(45) Date of publication and mention of the grant of the patent: **10.02.2016**
(21) Application number: 13193219.6
(22) Date of filing: 15.11.2013
(51) Int. Cl.: F01N 5/02, F01N 13/16, F01N 3/02

(54) **Exhaust gas heat exchanger with thermal energy recovery for an exhaust system of an internal combustion engine**
Abgaswärmetauscher mit thermischer Energierückgewinnung für ein Abgassystem eines Verbrennungsmotors
Echangeur de chaleur de gaz d'echappement avec récupération thermique pour un système d'echappement d'un moteur à combustion interne

(30) Priority: 15.11.2012 IT BO20120626
(43) Date of publication of application: 21.05.2014
(73) Proprietor: Magneti Marelli S.p.A., Corbetta (MI) (IT)
(72) Inventor: Pazé, Costanza, 10034 Chivasso (IT); Milani, Emanuele, 13876 Sandigliano (IT)
(74) Representative: Maccagnan, Matteo

(56) References cited:
- EP-A2- 2 412 945
- DE-A1-102008 025 795
- DE-A1-102011 103 109
- JP-A- H07 224 731

## Description

### TECHNICAL FIELD

The present invention relates to a heat exchanger with thermal energy recovery for an exhaust system of an internal combustion engine.

### PRIOR ART

An internal combustion thermal engine is equipped with an exhaust system, which serves the function of emitting the exhaust gases generated by the combustion into the atmosphere thus limiting both the noise and the pollutant content. A modern exhaust system comprises at least one converter device equipped with a catalytic element followed by at least one silencer; defined inside of the silencer is a labyrinth which determines a path for the exhaust gases from an inlet opening to an outlet opening.

To increase the overall energy efficiency, it has been recently proposed to also exploit part of the heat which is present in the exhaust gases and normally dispersed into the outside environment; for example, the heat present in the exhaust gases may be used to heat the coolant of the internal combustion engine, the lubricating oil for the internal combustion engine, and/or the lubricating oil for the transmission in the instants following the cold start so as to accelerate reaching the optimal operating temperature. To exploit part of the heat which is present in the exhaust gases, it has been proposed to use a liquid-gas heat exchanger which is arranged along the path of the exhaust gases in order to be hit by the exhaust gases. In order to cause the exhaust gases to flow through the heat exchanger only under given conditions (for example, when the engine is cold so as to exploit the heat of the exhaust gases to accelerate heating the coolant of the internal combustion engine), it has been proposed to arrange a bypass duct which allows the exhaust gases to bypass the heat exchanger and is regulated by a bypass valve.

An example of a heat exchanger equipped with a bypass duct for an exhaust system is proposed in Patent Application WO2005024193A1.

In an attempt to contain the costs and volumes, it has been proposed to integrate the heat exchanger within the silencer; a similar solution is described in Patent Applications JP2004245127A2, WO2008117580A1 and EP2412945A1.

### DESCRIPTION OF THE INVENTION

It is the object of the present invention to provide a heat exchanger with thermal energy recovery for an exhaust system of an internal combustion engine, which heat exchanger allows increased energy efficiency and faster heating from cold to be obtained, while being easy and affordable to make.

According to the present invention, a heat exchanger is provided with thermal energy recovery for an exhaust system of an internal combustion engine, as claimed by the appended claims.

### BRIEF DESCRIPTION OF THE DRAWINGS

The present invention shall now be described with reference to the accompanying drawings, which illustrate several non-limiting embodiment examples thereof, in which:
- figure 1 is a diagrammatic view of an internal combustion engine equipped with an exhaust system which is coupled with a heat exchanger made in accordance with the present invention;
- figure 2 is a perspective view, and with parts removed for clarity, of a silencer of the exhaust system in figure 1, which integrates the heat exchanger therein;
- figure 3 is a perspective view, and on enlarged scale, of a detail in figure 2 which shows the heat exchanger in detail;
- figure 4 is a cross-section view, and on enlarged scale, of a pipe of the heat exchanger;
- figures 5 and 6 are two longitudinal sectional diagrammatic views of the silencer in figure 2, shown in two different operating configurations;
- figure 7 is a schematic view of the internal combustion engine in figure 1, in which the heat exchanger is separate from the silencer;
- figure 8 is a diagrammatic view of a deflector device accommodating the heat exchanger in figure 7; and
- figure 9 is a diagrammatic view of a further embodiment of a deflector device accommodating the heat exchanger in figure 7.

### PREFERRED EMBODIMENTS OF THE INVENTION

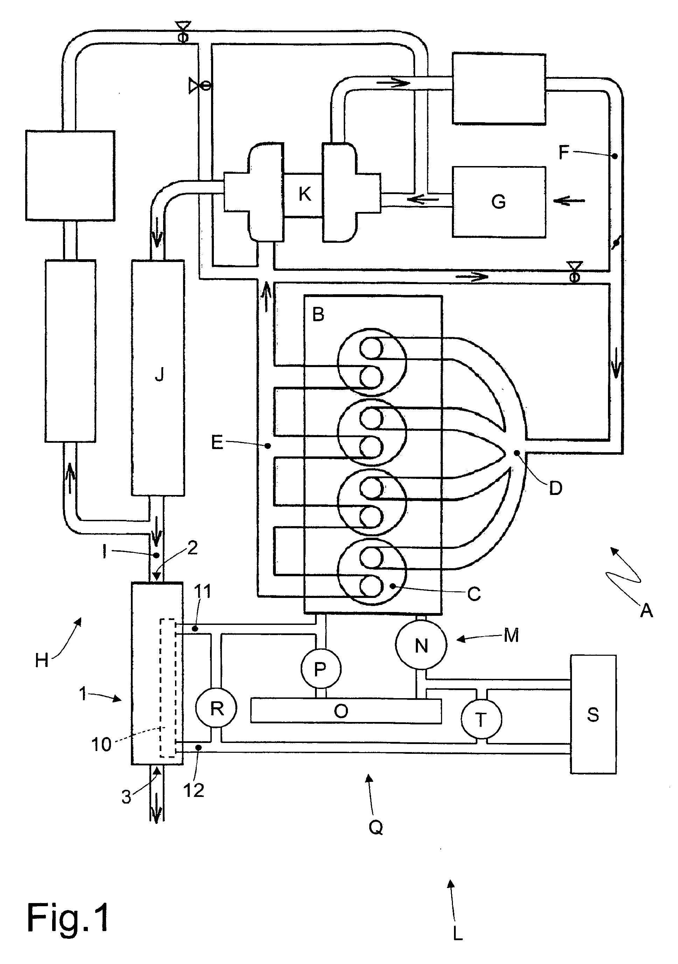

Letter A in figure 1 indicates an internal combustion engine as a whole, for a motor vehicle.

The internal combustion engine A is equipped with an engine block B in which four cylinders C are obtained arranged in line. Each cylinder C is connected to a suction manifold D by means of at least one respective suction valve, and to an exhaust manifold E by means of at least one respective exhaust valve. The suction manifold D receives fresh air (i.e. air coming from the external environment) through a suction duct F, which is equipped with an air filter G and is regulated by a throttle valve. Connected to the exhaust manifold E is an exhaust system H, which emits the gases generated by combustion into the atmosphere and comprises an exhaust duct I which originates from the exhaust manifold E. Arranged along the exhaust duct I is an oxidizing catalyzer J (which could also integrate a particulate filter) and a silencer 1 arranged downstream of the catalyzer J.

The internal combustion engine 1 is supercharged by means of a turbo supercharger K equipped with a turbine, which is arranged along the exhaust duct I to rotate at high speed under the action of the exhaust gases expelled from the cylinders C, and with a compressor, which is arranged along the suction duct F and is connected mechanically to the turbine to be dragged in rotation by the turbine so as to increase the pressure of the air supplied in the suction duct F.

The internal combustion engine A comprises a liquid cooling system L (typically water mixed with an antifreeze additive), which serves the function of cooling the engine block B to prevent the engine block B from overheating.

The cooling system L comprises a main circuit M, which extends for the most part inside the engine block B and is equipped with a circulation pump N which is activated directly by a driving shaft of the internal combustion engine A. The main circuit M is connected to a radiator O (i.e. to a water/air heat exchanger) which serves the function of dissipating the excess heat into the outside environment. The circulation through radiator O is regulated by a thermostat P which opens only when the temperature of the coolant is greater than a predetermined temperature threshold; due to the presence of thermostat P, when the internal combustion engine A is cold, the coolant does not flow through radiator O (i.e. does not cool down in radiator O) and hence reaches the optimal operating temperature faster (particularly when the outside temperature is low).

The cooling system L comprises a secondary circuit Q, which is connected to the main circuit M in parallel with radiator O and upstream of thermostat P. Arranged along the secondary duct Q is a heat exchanger 10 (better described below) which is integrated within silencer 1, is of the liquid-gas type, and is used to recover part of the heat held by the exhaust gases which flow through silencer 1. Connected in parallel with the heat exchanger 10 is a bypass solenoid valve R which is adapted to be closed to bypass the circulation of the coolant through the heat exchanger 10. Furthermore, arranged along the secondary duct Q is a heat exchanger S which is of the liquid-air type, is part of an air conditioning system, and is used to heat the conditioned air which is emitted into an interior compartment of the vehicle. Connected in parallel with the heat exchanger S is a bypass solenoid valve T which is adapted to be closed to bypass the circulation of the coolant through the heat exchanger S.

It is worth noting that the bypass solenoid valve R and/or the bypass solenoid valve T might not be present, could be arranged in different positions with respect to that shown in figure 1 (for example, in series at the corresponding heat exchangers 10 and S), or could be three-way and hence be arranged at a bifurcation upstream or downstream of the corresponding heat exchanges 10 and S.

The bypass solenoid valve R is controlled to cause the coolant to flow through the heat exchanger 10 so as to heat the coolant using part of the heat held by the exhaust gases which flow through silencer 1; obviously, the coolant is heated through the heat exchanger 10 only when the coolant is cold (i.e. is at a lower temperature than the optimal operating temperature). To this end, it is worth noting that as long as the coolant (and therewith, the whole engine block B) does not reach the optimal operating temperature, the combustion inside the cylinders C does not occur under the best conditions and hence determines an unwanted increase both in the consumption of fuel and in the generation of pollutants.

The bypass solenoid valve T is controlled to cause the coolant to flow through the heat exchanger S so as to heat the conditioned air which is emitted by the air conditioning system into the interior compartment of the vehicle; typically, the coolant is caused to flow through the heat exchanger S only when there is a need to heat the conditioned air which is emitted into the interior compartment of the vehicle, i.e. according to the objectives which the passengers of the vehicle request from the air conditioning system.

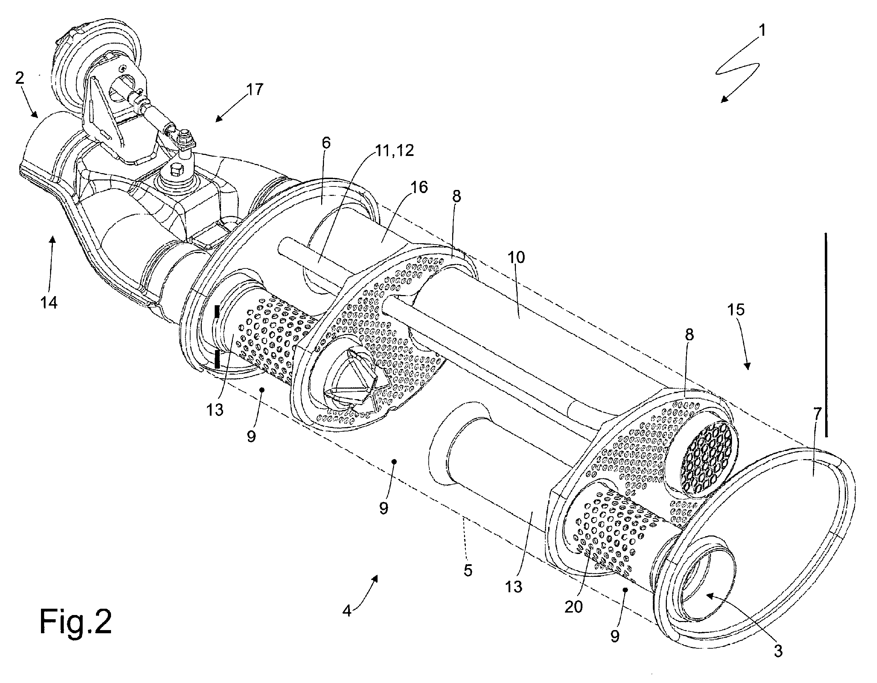

As shown in figure 2, silencer 1 has an inlet opening 2 and an outlet opening 3, through which the exhaust gases flowing through silencer 1, flow. Silencer 1 comprises a main body 4, which is made of sheet metal, is tubular in shape and preferably has an elliptical cross section. The main body 4 consists of a cylindrical lateral wall 5 (which may be single-sheet or double-sheet), of a flat front wall 6 arranged close to the inlet opening 2 and of a flat rear wall 7 arranged close to the outlet opening 3; the front wall 6 and the rear wall 7 close the cylindrical lateral wall 5 at the two ends.

Arranged inside the main body 4 are two diaphragms 8 which are arranged parallel to the walls 6 and 7 and divide the space inside the main body 4 into three chambers 9 side by side. Furthermore, arranged inside the main body 4 is the heat exchanger 10 which is of the liquid-gas type and is used to recover part of the heat held by the exhaust gases which flow through silencer 1. According to a preferred embodiment, the heat exchanger 10 comprises a liquid inlet duct 11 and a liquid outlet duct 12 which longitudinally leave the main body 4 through the front wall 6 (and therefore perpendicular to the front wall 6); this arrangement of the ducts 11 and 12 allows the structural tensions to be minimized which are generated by the different thermal expansion to which the heat exchanger 10 is subjected with respect to the other components of silencer 1 due to the effect of the different operating temperature (the heat exchanger 10 always remains much colder than the other components of silencer 1 when it is cooled by the liquid flowing therein).

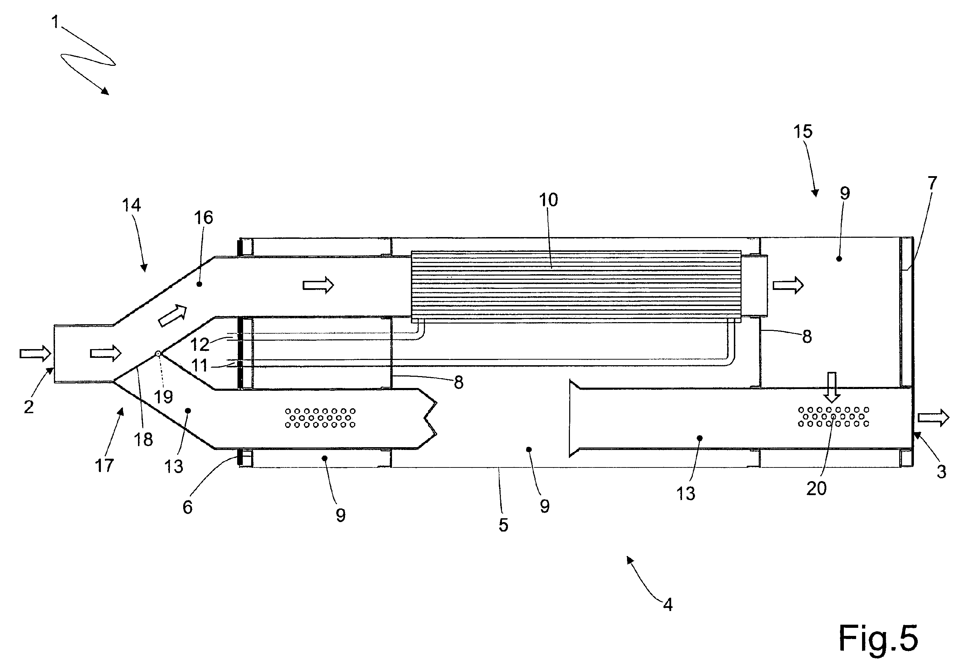

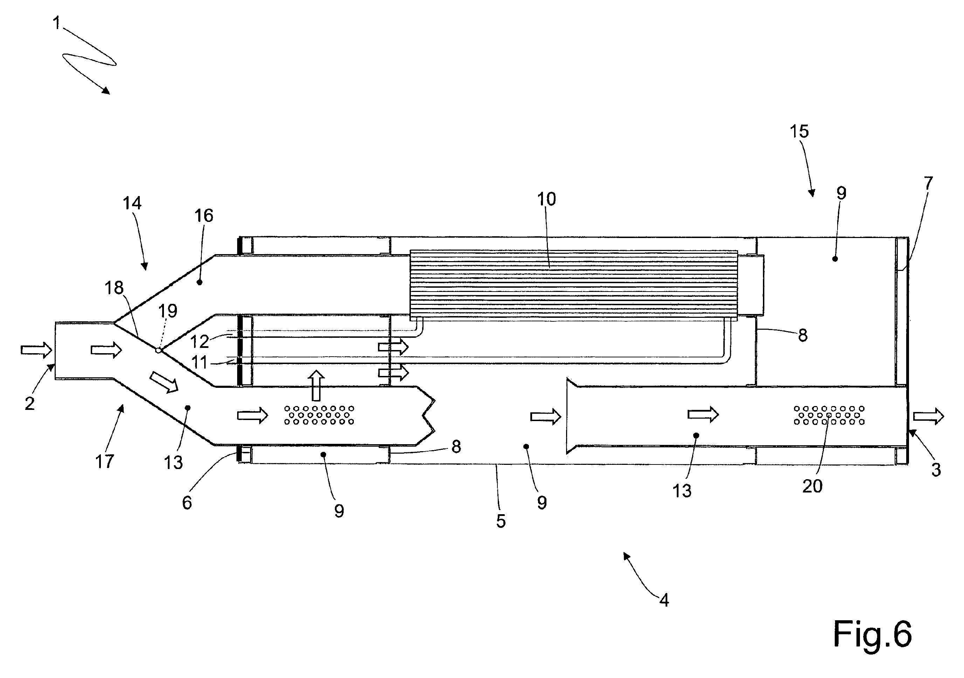

Silencer 1 comprises a duct 13, which is shaped so as to have a silencing effect and partially extends inside the main body 4 from a bifurcation area 14, which is arranged immediately downstream of the inlet opening 2, to a convergence area 15, which is arranged immediately upstream of the outlet opening 3. Furthermore, silencer 1 comprises a duct 16, which runs through the heat exchanger 10 and partially extends inside the main body 4 from the bifurcation area 14 to the convergence area 15 in parallel with duct 13. The two ducts 13 and 16 are functionally arranged in parallel to each other and are physically arranged side by side. Finally, silencer 1 comprises a control valve 17, which is suited to alternatively direct the flow of exhaust gases through duct 13 (as shown in figure 6) or through duct 16 (as shown in figure 5).

As shown in figures 5 and 6, the control valve 17 comprises a flat cover 18 which is hinged to rotate about an axis of rotation 19 between a first position in which it closes duct 13 (as shown in figure 5) and a second position in which it closes duct 16 (as shown in figure 6). The control valve 17 is arranged outside the main body 4 at the bifurcation area 14 immediately downstream of the inlet opening 2 (according to another embodiment not illustrated, the control valve 17 could be arranged at the convergence area 15 immediately upstream of the outlet opening 3). Due to the fact that the control valve 17 is arranged outside the main body 4, the actuating valve 17 may be much more compact because the corresponding actuator may be arranged very close to shutter 18; thereby the shaft that supports shutter 18 and receives the motion from the actuator, is extremely short and therefore has limited thermal expansions in absolute value.

The bifurcation area 14 is arranged outside the main body 4 and, as mentioned above, the control valve 17 is arranged at the bifurcation area 14 immediately downstream of the inlet opening 2. The two ducts in the bifurcation area 14 are arranged tilted to each other so as to be "V" shaped; shutter 18 of the control valve 17 is hinged at the vertex of the "V" to rotate about the axis of rotation 19 between the first position in which it closes duct 13 (as shown in figure 5) and the second position in which it closes duct 16 (as shown in figure 6).

The convergence area 15 is arranged inside the main body 4. In particular, the convergence area 15 consists of a final chamber 9, which is obtained inside the main body 4 close to the rear wall 7 and in which duct 16 leads into; duct 13 runs through the final chamber 9 and has, inside the final chamber 9 itself, a plurality of through holes 20. The exhaust gases discharged from duct 16 inside the final chamber 9 enter the final portion of duct 13 through the through holes 20 and hence reach the outlet opening 3.

Duct 16 runs through the main body 4 by passing through the front wall 6 but not through the rear wall 7, and duct 13 runs through the main body 4 by passing both through the front wall 6 and the rear wall 7; in this embodiment, only the inlet opening 2 is arranged outside the main body 4 and at a given distance from the front wall 6, while the outlet opening 3 is arranged at the rear wall 7 and consists of an outlet of duct 13.

Duct 13 has an interruption of the continuity thereof in an intermediate chamber 9 because it is shaped to emit the exhaust gases originating from the inlet opening 2 into the intermediate chamber 9 so as to expand the exhaust gases in the intermediate chamber 9 and hence collect the exhaust gases later from the intermediate chamber 9 to convey the exhaust gases towards the outlet opening 3.

According to a preferred embodiment, welded to an internal surface of the ducts 13 and 16 and at the control valve 17 is an annular abutting element (typically square in shape) against which an end of shutter 18 rests which is opposite to the hinged end. The function of the abutting element is to provide a stop for the movement of shutter 18 so as to precisely define the two positions of the shutter. Preferably, the side of the abutting element facing shutter 18 is coated with a wire-mesh which serves the function of dampening the impact of shutter 18 against the abutting element thus being elastically deformed under the thrust of shutter 18.

According to a possible embodiment, an external wall of the heat exchanger 10 is coated with an insulating coating. Such an insulating coating may consist of a low thermal conductivity material which surrounds the heat exchanger 10 or may consist of an empty gap (i.e. of an air gap) which surrounds the heat exchanger 10. The function of the insulating coating is to limit the transfer of heat towards the heat exchanger 10 when duct 16 is closed by the control valve 17 (as shown in figure 6). According to a preferred embodiment, the insulating coating could consist of ceramic fibre which fills one or more chambers 9 and serves a double function: thermally insulating the heat exchanger 10 and deadening the sound.

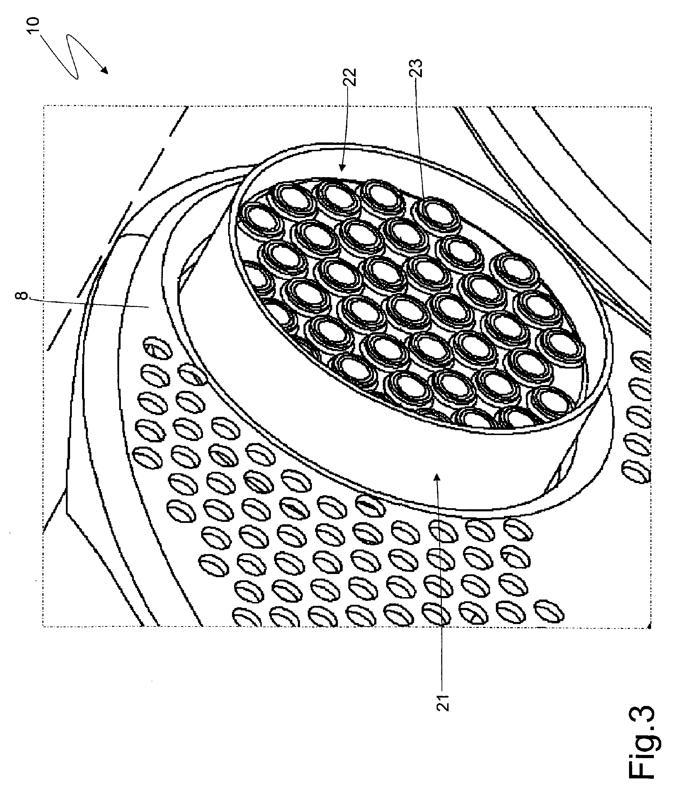

As shown in figure 3, the heat exchanger 10 comprises a cylindrical fluid-tight chamber 21 inside of which the coolant is caused to circulate. The cylindrical chamber 21 is longitudinally crossed by set of pipes 22 which are arranged parallel to each other to define a plurality of corresponding flowing channels for the exhaust gases. The exhaust gases flowing through the pipes 22 heat the walls 23 of the pipes 22 which are in contact with the coolant present inside the cylindrical chamber 21.

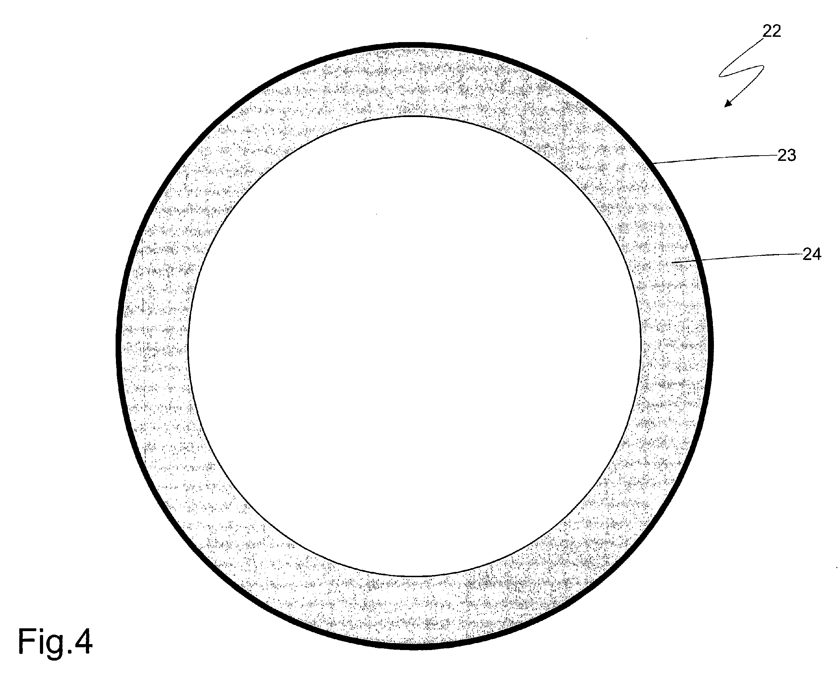

As shown in figure 4, wall 23 of each pipe 22 is internally coated with a coating layer 24 consisting of a material with an exothermic hygroscopy, i.e. a material that is hygroscopic and has an exothermic water absorption process. In other words, the internal volume of each pipe 22 is partly occupied by a annular-shaped coating layer 24 which is fastened to wall 23 of pipe 22 and consists of a material with an exothermic hygroscopy. The coating layer 24 may be formed only by the material with an exothermic hygroscopy, or may be formed by a mix between the material with an exothermic hygroscopy and other components essentially serving the function of ensuring the gripping of the pipes 22 to the walls 23.

According to a preferred embodiment, the material with an exothermic hygroscopy is an oxide, and in particular is a silicon oxide-based oxide.

According to a preferred embodiment, the material with an exothermic hygroscopy is a zeolite which normally is a silicoaluminate, i.e. is a silicon oxide-based and an aluminium oxide-based oxide; in vary rare cases, a zeolite may not have alumina, i.e. may be a silicon oxide without aluminium. Zeolites (from Greek "zein" or "to boil" and "lithos" or "stone") are a mineral family with a regular crystalline and microporous structure characterised by an enormous quantity of void volumes inside the crystals. Zeolites are extremely hygroscopic and the process of water absorption is exothermic, i.e. releases heat; in other words, when a zeolite absorbs the water, it releases heat at the same time. Numerous zeolites exist, both natural and synthetic; by way of non-limiting example, chabazite (also known as zeolite D), clinoptilolite, erionite, faujasite (also known as zeolite X and zeolite Y), ferrierite, mordenite, zeolite A, zeolite P, zeolite Beta, zeolite ZSM-5 and silicalite may also be used for the coating layer 24 of the pipes 22. A detailed description of the above-identified zeolites is easily found in literature (for example, in the book D. W. Breck, "ZEOLITE MOLECULAR SIEVES", John Wiley and Sons, New York, 1974).

According to a further embodiment, the material with an exothermic hygroscopy is a silica gel consisting of silicon oxide.

In use, under the push of the actuator device, shutter 18 of the control valve 17 rotates about the axis of rotation 19 between the first position (shown in figure 5), in which shutter 18 completely closes duct 13 and hence allows the flow of exhaust gases only through duct 16, and a second position (shown in figure 6), in which shutter 18 completely closes duct 16 and hence allows the flow of exhaust gases only through duct 13. The first position (shown in figure 5) is used to direct the exhaust gases through the heat exchanger 10. The second position (shown in figure 6) is used to exclude the flow through the heat exchanger 10 of the exhaust gases flowing through silencer 1.

When shutter 18 of the control valve 17 is in the first position (shown in figure 5), i.e. when the exhaust gases flow through duct 16 and hence through the heat exchanger 10, the steam present in the exhaust gases (deriving, for the most part, from the fuel combustion) is captured by the material with an exothermic hygroscopy present inside the pipes 22 of the heat exchanger 10 (in particular the material with an exothermic hygroscopy present in the coating layers 24 of the pipes 22); accordingly, following the hydration (i.e. following the water absorption), the material with an exothermic hygroscopy releases heat which contributes to heating the coolant inside the heat exchanger 10. It is worth nothing that when the internal combustion engine 1 is "cold" (i.e. when the temperature of the coolant is lower than the optimal operating temperature), the exhaust gases which are emitted by the internal combustion engine 1 are also "colder" than the exhaust gases which are emitted when the internal combustion engine 1 has reached its optimal operating temperature; the fact that the exhaust gases are "colder" than standard is positive, because this allows the material with an exothermic hygroscopy to absorb the steam present in the exhaust gases more easily.

When shutter 18 of the control valve 17 is in the second position (shown in figure 6), i.e. when the exhaust gases flow through duct 13 and hence not through the heat exchanger 10, the pipes 22 of the heat exchanger 10 are not involved by steam; under these conditions and due to the effect of the high temperatures of silencer 1 (at speed, the temperature of silencer 1 is greater than 200-250 °C), the material with an exothermic hygroscopy present inside the pipes 22 of the heat exchanger 10 (in particular, the material with an exothermic hygroscopy present in the coating layers 24 of the pipes 22) is dehydrated thus releasing all the water that was captured previously and hence absorbing heat.

According to a possible embodiment, when the internal combustion engine 1 is under ideal thermal conditions (i.e. when the internal combustion engine 1, and therefore the exhaust gases emitted by the internal combustion engine 1, have an elevated temperature), it could be possible to move, for a limited time interval (for example, in the range of several minutes), shutter 18 of the control valve 17 into the first position (shown in figure 5) to cause the "hot" exhaust gases to flow through the heat exchanger 10 and therefore promote the dehydration of the material with an exothermic hygroscopy present in the coating layers 24 of the pipes 22. Indeed, when the exhaust gases are "hot", i.e. have a temperature above a given threshold, the water molecules present in the exhaust gases have a kinetic energy which is greater than the absorption energy of the material with an exothermic hygroscopy and hence are not captured by the material with an exothermic hygroscopy. Accordingly, when "hot" exhaust gases, i.e. with a temperature greater than a given threshold, flow through the heat exchanger 10, not only is the material with an exothermic hygroscopy not capable of absorbing the water molecules present in the exhaust gases, but, contrarily, it releases the water molecules that it had absorbed previously thus dehydrating itself. In other words, the dehydration of the material with an exothermic hygroscopy may also occur by placing shutter 18 of valve 17 in the first position (shown in figure 5) for a short time interval when the internal combustion engine 1 is under the ideal thermal conditions.

In essence, when the internal combustion engine A is at speed, part of the heat of the exhaust gases (which normally is entirely dispersed into the outside environment) is used to dehydrate the material with an exothermic hygroscopy present inside the pipes 22 of the heat exchanger 10; in other words, when the internal combustion engine A is at speed, the material with an exothermic hygroscopy present inside the pipes 22 of the heat exchanger 10 "stores" part of the heat of the exhaust gases by dehydrating itself. Then, when the internal combustion engine A is cold started again, the material with an exothermic hygroscopy present inside the pipes 22 of the heat exchanger 10 "releases" the heat by hydrating itself with the steam present in the exhaust gases; in other words, following a cold start, the material with an exothermic hygroscopy present inside the pipes 22 of the heat exchanger 10 "releases" the heat "stored" previously by hydrating itself. Thereby, the material with an exothermic hygroscopy present inside the pipes 22 of the heat exchanger 10 "releases" the heat "stored" previously while accelerating the heating of the coolant, therefore reducing the time required to bring the coolant to the optimal operating temperature.

Summarizing, the material with an exothermic hygroscopy present inside the pipes 22 of the heat exchanger 10 recovers part of the heat of the exhaust gases (which normally is entirely dispersed into the outside environment) and uses such a recovered heat to heat the coolant faster following a cold start.

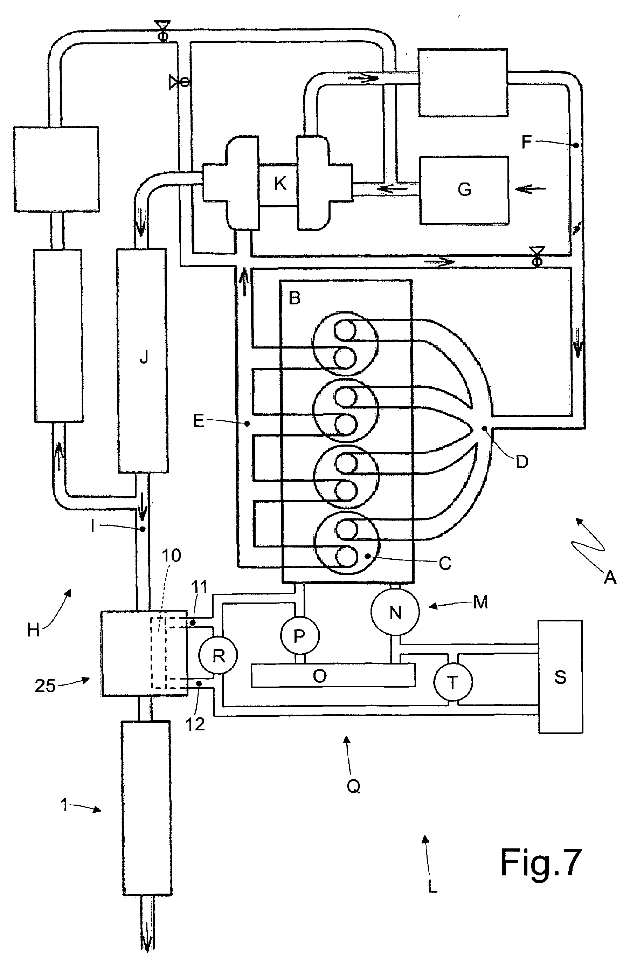

In the embodiment shown in figure 1, the heat exchanger is integrated within silencer 1. In the alternative embodiment shown in figure 7, the heat exchanger 10 is separate and independent from silencer 1 and is arranged upstream of silencer 1 (i.e. the heat exchanger 10 is arranged between the oxidizing catalyzer J and silencer 1).

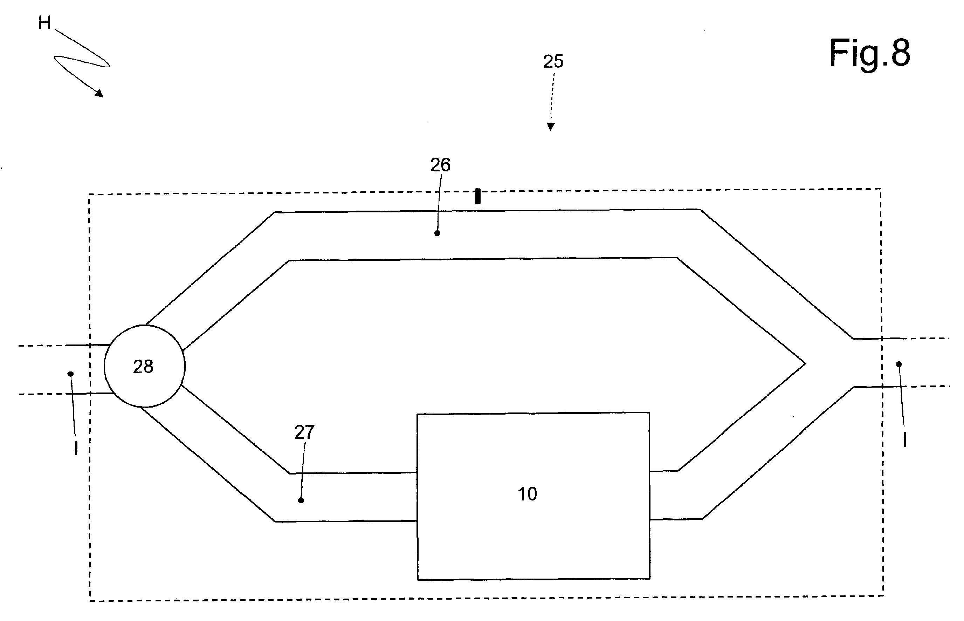

As shown in figure 8, the heat exchanger 10 is inserted in a deflector device 25, which is connected in series to the exhaust duct I and comprises a main duct 26 which has no obstacles, and a secondary duct 27 which has the heat exchanger 10. A control valve 28 (for example, similar to the control valve 17 described above) regulates the exhaust gases flowing through the two ducts 26 and 27. Obviously, the heat exchanger 10 in this embodiment also comprises a set of pipes 22 for the exhaust gases which is equipped internally with the coating layers 24 consisting of a material with an exothermic hygroscopy.

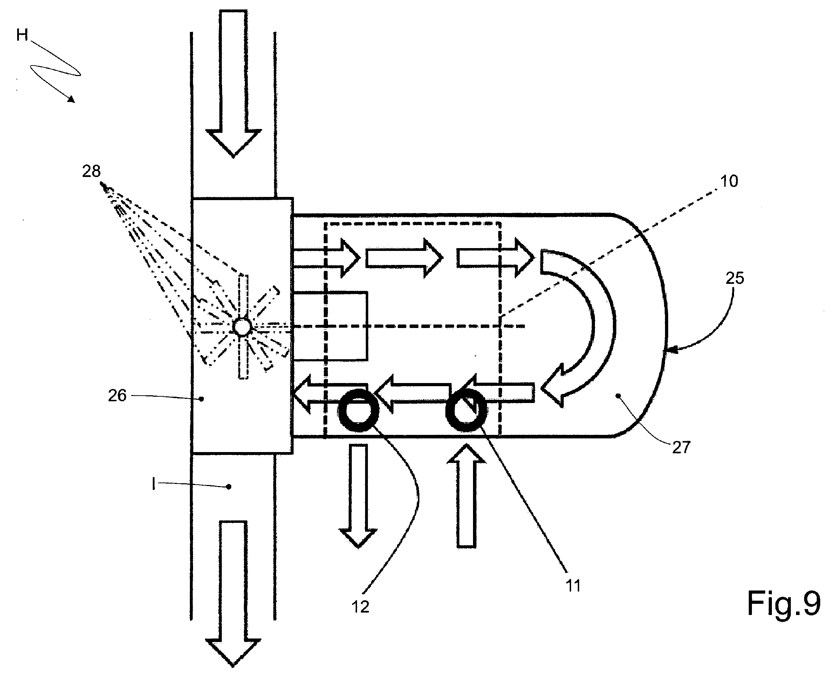

Figure 9 shows a different embodiment of the deflector device 25, which is connected in series to the exhaust duct I and accommodates the heat exchanger 10. For a detailed description of the operation of the deflector device 25 shown in figure 9, refer to the description in Patent Application WO2011132035A1. Obviously, the heat exchanger 10 in this embodiment also comprises a set of pipes 22 for the exhaust gases which is equipped internally with the coating layers 24 consisting of a material with an exothermic hygroscopy.

In the embodiments described above, the heat of the exhaust gases and the heat released by the coating layers 24 are used to heat the coolant of the internal combustion engine in the instants following the cold start; according to alternative (and perfectly equivalent) embodiments not illustrated, the heat of the exhaust gases and the heat released by the coating layers 24 could also (or only) be used to heat the lubricating oil for the internal combustion engine 1, and/or the lubricating oil for the transmission in the instants following the cold start.

The heat exchanger 10 described above has numerous advantages.

Firstly, the heat exchanger 10 allows increased energy efficiency to be obtained and faster heating from cold, with respect to a similar conventional heat exchanger due to the presence of the coating layers 24 consisting of a material with an exothermic hygroscopy inside the pipes 22. Indeed, the material with an exothermic hygroscopy allows part of the heat of the exhaust gases to be "stored" by dehydrating itself when the internal combustion engine A is at speed; then, when the internal combustion engine A is cold started again, the material with an exothermic hygroscopy "releases" the heat "stored" previously by hydrating itself with the steam present in the exhaust gases.

Furthermore, the heat exchanger 10 described above is simple and affordable to make, because with respect to a similar conventional heat exchanger, it requires the sole modification of placing coating layers 24 consisting of a material with an exothermic hygroscopy, inside the pipes 22. To this end, it is worth noting that the zeolites or the silica gel are materials which are easy to obtain and are affordable, and that placing a coating layer 24 inside a pipe 22 is easy to automate and therefore can be executed in contained times at reduced costs.

## Claims

1. A heat exchanger (10) with thermal energy recovery for an exhaust system (H) of an internal combustion engine (A); the heat exchanger (10) comprises a plurality of pipes (22), which define a plurality of corresponding flowing channels for the exhaust gases; the heat exchanger (10) is **characterized in that** a wall (23) of at least one pipe (22) is internally coated with a coating layer (24) comprising a material with an exothermic hygroscopy, namely a material that is hygroscopic and performs an exothermic water absorption process.

2. A heat exchanger (10) according to claim 1, wherein the material with an exothermic hygroscopy is an oxide.

3. A heat exchanger (10) according to claim 2, wherein the material with an exothermic hygroscopy is a silicon oxide-based oxide.

4. A heat exchanger (10) according to claim 3, wherein the material with an exothermic hygroscopy is a zeolite.

5. A heat exchanger (10) according to claim 3, wherein the material with an exothermic hygroscopy is a silica gel consisting of silicon oxide.

6. A heat exchanger (10) according to any of the claims from 1 to 5, wherein the heat exchanger (10) is of the liquid-gas type and comprises a liquid inlet duct (11) and a liquid outlet duct (12).

7. A heat exchanger (10) according to claim 6 and comprising a fluid-tight chamber (21), inside which the liquid that has to receive the heat from the gases is caused to circulate, and inside which the pipes (22) that are suited to be flown through by the exhaust gases are arranged.

8. A silencer (1) comprising:
an inlet opening (2) and an outlet opening (3), through which the exhaust gases flow;
a main body (4), which has a tubular shape and consists of a cylindrical lateral wall (5) as well as of a flat front wall (6) arranged close to the inlet opening (2) and of a flat rear wall (7) arranged close to the outlet opening (3), which close the cylindrical lateral wall (5) at the two ends;
a heat exchanger (10), which is arranged inside the main body (4);
a first duct (13), which is shaped so as to have a silencing effect and at least partially extends inside the main body (4) from a bifurcation area (14), which is arranged immediately downstream of the inlet opening (2), to a convergence area (15), which is arranged immediately upstream of the outlet opening (3);
a second duct (16), which runs through the heat exchanger (10) and at least partially extends inside the main body (4) from the bifurcation area (14) to the convergence area (15) in parallel with the first duct (13); and
a control valve (17), which is suited to alternatively direct the flow of exhaust gases through the first duct (13) or through the second duct (16);
wherein the heat exchanger (10) comprises a plurality of pipes (22), which defines a plurality of corresponding flowing channels for the exhaust gases;
the silencer (1) is **characterized in that** a wall (23) of at least one pipe (22) is internally coated with a coating layer (24) comprising a material with an exothermic hygroscopy, namely a material that is hygroscopic and performs an exothermic water absorption process.

9. A silencer (1) according to claim 8, wherein the material with an exothermic hygroscopy is an oxide.

10. A silencer (1) according to claim 9, wherein the material with an exothermic hygroscopy is a silicon oxide-based oxide.

11. A silencer (1) according to claim 10, wherein the material with an exothermic hygroscopy is a zeolite.

12. A silencer (1) according to claim 10, wherein the material with an exothermic hygroscopy is a silica gel consisting of silicon oxide.

13. A silencer (1) according to any of the claims from 8 to 12, wherein the heat exchanger (10) is of the liquid-gas type and comprises a liquid inlet duct (11) and a liquid outlet duct (12).

14. A silencer (1) according to claim 13, wherein the heat exchanger (10) comprises a fluid-tight chamber (21), inside which the liquid that has to receive the heat from the gases is caused to circulate, and inside which the pipes (22) that are suited to be flown through by the exhaust gases are arranged.

15. A silencer (1) according to any of the claims from 8 to 14, wherein:
the control valve (17) is arranged outside of the main body (4);
the bifurcation area (14) is arranged outside of the main body (4) and the control valve (17) is arranged in correspondence of the bifurcation area (14); and
the convergence area (15) is arranged inside the main body (4).

16. A silencer (1) according to claim 15, wherein:
the convergence area (15) consists of a final chamber (9), which is obtained inside the main body (4) close to the rear wall (7);
the first duct (13) extends through the final chamber (9) and has, inside the final chamber (9) itself, a plurality of through holes (20); and
the second duct (16) leads into the final chamber (9).

## Patentansprüche

1. Wärmetauscher (10) zur Wärmeenergierückgewinnung für ein Abgassystem (H) eines Verbrennungsmotors (A); wobei der Wärmetauscher (10) eine Vielzahl von Rohren (22) aufweist, die eine Vielzahl von korrespondierenden Durchflusskanälen für die Abgase bilden; wobei der Wärmetauscher (10) **dadurch gekennzeichnet ist, dass** eine Wand (23) mindestens eines Rohres (22) an der Innenseite mit einer Beschichtungsschicht (24) beschichtet ist, die ein Material mit exothermer Hygroskopie aufweist, nämlich ein Material, das hygroskopisch ist und einen exothermen Wasserabsorptionsprozess vollzieht.

2. Wärmetauscher (10) nach Anspruch 1, wobei das Material mit exothermer Hygroskopie ein Oxid ist.

3. Wärmetauscher (10) nach Anspruch 2, wobei das Material mit exothermer Hygroskopie ein Oxid auf Siliziumoxidbasis ist.

4. Wärmetauscher (10) nach Anspruch 3, wobei das Material mit exothermer Hygroskopie ein Zeolith ist.

5. Wärmetauscher (10) nach Anspruch 3, wobei das Material mit exothermer Hygroskopie ein aus Siliziumoxid bestehendes Silica Gel ist.

6. Wärmetauscher (10) nach einem der Ansprüche von 1 bis 5, wobei der Wärmetauscher dem Flüssigkeit-Gas-Typ entspricht und eine Flüssigkeitseinlassleitung (11) und eine Flüssigkeitsauslassleitung (12) aufweist.

7. Wärmetauscher (10) nach Anspruch 6, enthaltend eine fluiddichte Kammer (21), in welcher die die Wärme von den Gasen aufnehmende Flüssigkeit in Zirkulation versetzt wird und in welcher die Rohre (22), die zur Durchströmung durch die Abgase ausgelegt sind, angeordnet sind.

8. Schalldämpfer (1), enthaltend:
eine Einlassöffnung (2) und eine Auslassöffnung (3), durch welche die Abgase fließen;
einen Hauptkörper (4), der rohrförmig ist und aus einer zylindrischen Seitenwand (5) sowie aus einer flachen Vorderwand (6), die nahe an der Einlassöffnung (2) angeordnet ist, und aus einer flachen Rückwand (7), nahe an der Auslassöffnung (3) angeordnet ist, besteht, welche die zylindrische Seitenwand (5) an den beiden Enden verschließen;
einen Wärmetauscher (10), der innerhalb des Hauptkörpers (4) angeordnet ist;
eine erste Leitung (13), die so geformt ist, dass sie einen schalldämpfenden Effekt hat und sich mindestens teilweise innerhalb des Hauptkörpers (4) von einem Gabelungsbereich (14), der unmittelbar stromabwärts der Einlassöffnung (2) angeordnet ist, zu einem Vereinigungsbereich (15) erstreckt, der unmittelbar stromaufwärts der Auslassöffnung (3) angeordnet ist;
eine zweite Leitung, die durch den Wärmetauscher (10) verläuft und sich mindestens teilweise innerhalb des Hauptkörpers (4) von dem Gabelungsbereich (14) zu dem Vereinigungsbereich (15) parallel zu der ersten Leitung (13) erstreckt; und
ein Steuerventil (17), welches dafür geeignet ist, den Abgasstrom alternativ durch die erste Leitung (13) oder durch die zweite Leitung (16) zu leiten;
wobei der Wärmetauscher (10) eine Vielzahl von Rohren (22) umfasst, die eine Vielzahl von korrespondierenden Durchflusskanälen für die Abgase bilden;
wobei der Schalldämpfer (1) **dadurch gekennzeichnet ist, dass** eine Wand (23) mindestens eines Rohres (22) im Inneren mit einer Beschichtungsschicht (24) beschichtet ist, die ein Material mit exothermer Hygroskopie aufweist, nämlich ein Material, das hygroskopisch ist und einen exothermen Wasserabsorptionsprozess vollzieht.

9. Schalldämpfer (1) nach Anspruch 8, wobei das Material mit exothermer Hygroskopie ein Oxid ist.

10. Schalldämpfer (1) nach Anspruch 9, wobei das Material mit exothermer Hygroskopie ein Oxid auf Siliziumoxidbasis ist.

11. Schalldämpfer (1) nach Anspruch 10, wobei das Material mit exothermer Hygroskopie ein Zeolith ist.

12. Schalldämpfer (1) nach Anspruch 10, wobei das Material mit exothermer Hygroskopie ein aus Siliziumoxid bestehendes Silica Gel ist.

13. Schalldämpfer (1) nach einem der Ansprüche von 8 bis 12, wobei der Wärmetauscher (10) dem Flüssigkeit-Gas-Typ entspricht und eine Flüssigkeitseinlassleitung (11) und eine Flüssigkeitsauslassleitung (12) aufweist.

14. Schalldämpfer (1) nach Anspruch 13, wobei der Wärmetauscher (10) eine fluiddichte Kammer (21) enthält, in welcher die die Wärme von den Gasen aufnehmende Flüssigkeit in Zirkulation versetzt wird, und in welcher die Rohre (22), die zur Durchströmung durch die Abgase ausgelegt sind, angeordnet sind.

15. Schalldämpfer (1) nach einem der Ansprüche von 8 bis 14, wobei:
das Steuerventil (17) außerhalb des Hauptkörpers (4) angeordnet ist;
der Gabelungsbereich (14) außerhalb des Hauptkörpers (4) angeordnet ist und das Steuerventil (17) mit dem Gabelungsbereich (14) korrespondierend angeordnet ist; und
der Vereinigungsbereich (15) innerhalb des Hauptkörpers (4) angeordnet ist.

16. Schalldämpfer (1) nach Anspruch 15, wobei:
der Vereinigungsbereich (15) aus einer Endkammer (9) besteht, die innerhalb des Hauptkörpers (4) nahe an der Rückwand (7) erhalten wird;
die erste Leitung (13) durch die Endkammer (9) verläuft und innerhalb der Endkammer (9) selbst eine Vielzahl von Durchgangslöchern (20) hat; und
die zweite Leitung (16) in die Endkammer (9) führt.

## Revendications

1. Echangeur de chaleur (10) avec récupération d'énergie thermique pour un système d'échappement (H) d'un moteur à combustion interne (A) ; l'échangeur de chaleur (10) comprend une pluralité de tuyaux (22) qui définissent une pluralité de canaux correspondants pour l'écoulement pour les gaz d'échappement; l'échangeur de chaleur (10) est **caractérisé en ce qu'**une paroi (23) d'au moins un tuyau (22) est revêtue à l'intérieur d'une couche de revêtement (24) comprenant un matériau à hygroscopie exothermique, c'est-à-dire un matériau qui est hygroscopique et opère un processus d'absorption d'eau exothermique.

2. Echangeur de chaleur (10) selon la revendication 1, dans lequel le matériau à hygroscopie exothermique est un oxyde.

3. Echangeur de chaleur (10) selon la revendication 2, dans lequel le matériau à hygroscopie exothermique est un oxyde à base d'oxyde de silicium.

4. Echangeur de chaleur (10) selon la revendication 3, dans lequel le matériau à hygroscopie exothermique est une zéolite.

5. Echangeur de chaleur (10) selon la revendication 3, dans lequel le matériau à hygroscopie exothermique est un gel de silice constitué d'oxyde de silicium.

6. Echangeur de chaleur (10) selon l'une quelconque des revendications 1 à 5, dans lequel l'échangeur de chaleur (10) est du type gaz-liquide et comprend un conduit d'admission de liquide (11) et un conduit de sortie de liquide (12).

7. Echangeur de chaleur (10) selon la revendication 6, comprenant une chambre étanche aux fluides (21), à l'intérieur de laquelle le liquide destiné à recevoir la chaleur des gaz est amené à circuler, et à l'intérieur de laquelle sont disposés les tuyaux (22) aptes à être parcourus par les gaz d'échappement.

8. Silencieux (1), comprenant :
un orifice d'admission (2) et un orifice de sortie (3) à travers lesquels s'écoulent les gaz d'échappement ;
un corps principal (4) de forme tubulaire et constitué d'une paroi latérale cylindrique (5) ainsi que d'une paroi frontale plane (6) disposée à proximité de l'orifice d'admission (2) et d'une paroi arrière plane (7) disposée à proximité de l'orifice de sortie (3), qui ferment la paroi latérale cylindrique (5) aux deux extrémités ;
un échangeur de chaleur (10), disposé à l'intérieur du corps principal (4) ;
un premier conduit (13) conformé de façon à être doté d'un effet silencieux et qui s'étend partiellement à l'intérieur du corps principal (4) depuis une zone de bifurcation (14) disposée immédiatement en aval de l'orifice d'admission (2) jusqu'à une zone de convergence (15) disposée immédiatement en amont de l'orifice de sortie (3) ;
un second conduit (16) qui traverse l'échangeur de chaleur (10) et s'étend au moins partiellement à l'intérieur du corps principal (4) de la zone de bifurcation (14) à la zone de convergence (15), parallèlement au premier conduit (13) ; et
une vanne de régulation (17) apte à diriger le débit de gaz d'échappement alternativement à travers le premier conduit (13) ou le second conduit (16) ;
l'échangeur de chaleur (10) comprenant une pluralité de tuyaux (22), laquelle définit une pluralité de canaux correspondants pour l'écoulement des gaz d'échappement ;
le silencieux (1) étant **caractérisé en ce qu'**une paroi (23) d'au moins un tuyau (22) est revêtu à l'intérieur d'une couche de revêtement (24) comprenant un matériau à hygroscopie exothermique, c'est-à-dire un matériau qui est hygroscopique et opère un processus d'absorption d'eau exothermique.

9. Silencieux (1) selon la revendication 8, dans lequel le matériau à hygroscopie exothermique est un oxyde.

10. Silencieux (1) selon la revendication 9, dans lequel le matériau à hygroscopie exothermique est un oxyde à base d'oxyde de silicium.

11. Silencieux (1) selon la revendication 10, dans lequel le matériau à hygroscopie exothermique est une zéolite.

12. Silencieux (1) selon la revendication 10, dans lequel le matériau à hygroscopie exothermique est un gel de silice constitué d'oxyde de silicium.

13. Silencieux (1) selon l'une quelconque des revendications 8 à 12, dans lequel l'échangeur de chaleur (10) est du type liquide-gaz et comprend un conduit d'admission de liquide (11) et un conduit de sortie de liquide (12).

14. Silencieux (1) selon la revendication 13, dans lequel l'échangeur de chaleur (10) comprend une chambre étanche aux fluides (21), à l'intérieur de laquelle le liquide destiné à recevoir la chaleur des gaz est amené à circuler, et à l'intérieur de laquelle sont disposés les tuyaux (22) aptes à être parcourus par les gaz d'échappement.

15. Silencieux (1) selon l'une quelconque des revendications 8 à 14, dans lequel :
la vanne de régulation (17) est disposée à l'extérieur du corps principal (4) ;
la zone de bifurcation (14) est disposée à l'extérieur du corps principal (4) et la vanne de régulation (17) est disposée en correspondance avec la zone de bifurcation (14) ; et
la zone de convergence (15) est disposée à l'intérieur du corps principal (4).

16. Silencieux (1) selon la revendication 15, dans lequel :
la zone de convergence (15) consiste en une chambre finale (9) formée à l'intérieur du corps principal (4) à proximité de la paroi arrière (7) ;
le premier conduit (13) s'étend à travers la chambre finale (9) et présente, à l'intérieur de la chambre finale (9) elle-même, une pluralité d'orifices traversants (20) ; et
le second conduit (16) débouche dans la chambre finale (9).
